(19) Europäisches Patentamt
European Patent Office
Office européen des brevets

(11) **EP 4 235 336 B1**

(12) **EUROPEAN PATENT SPECIFICATION**

(45) Date of publication and mention
of the grant of the patent:
**03.12.2025 Bulletin 2025/49**

(21) Application number: **20959472.0**

(22) Date of filing: **20.11.2020**

(51) International Patent Classification (IPC):
**B60L 53/36** (2019.01)   **G05D 1/243** (2024.01)
**G05D 1/247** (2024.01)   **G05D 1/661** (2024.01)
**G05D 105/15** (2024.01)   **G05D 107/20** (2024.01)
**G05D 109/10** (2024.01)   **G05D 111/30** (2024.01)
**G05D 111/10** (2024.01)

(52) Cooperative Patent Classification (CPC):
**B60L 53/36; G05D 1/243; G05D 1/247;
G05D 1/661;** B60L 2240/62; B60L 2240/622;
B60L 2260/32; G05D 2105/15; G05D 2107/23;
G05D 2109/10; G05D 2111/10; G05D 2111/36

(86) International application number:
**PCT/CN2020/130293**

(87) International publication number:
**WO 2022/088313 (05.05.2022 Gazette 2022/18)**

(54) **METHOD AND SYSTEM FOR ROBOT AUTOMATIC CHARGING, ROBOT, AND STORAGE MEDIUM**

VERFAHREN UND SYSTEM ZUM AUTOMATISCHEN LADEN EINES ROBOTERS, ROBOTER UND SPEICHERMEDIUM

PROCÉDÉ ET SYSTÈME DE CHARGE AUTOMATIQUE DE ROBOT, ROBOT ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2020 CN 202011155311**

(43) Date of publication of application:
**30.08.2023 Bulletin 2023/35**

(73) Proprietor: **Suzhou Cleva Precision
Machinery & Technology Co., Ltd.
Suzhou, Jiangsu 215000 (CN)**

(72) Inventors:
• **REN, Xue**
**Suzhou, Jiangsu 215000 (CN)**
• **ZHU, Shaoming**
**Suzhou, Jiangsu 215000 (CN)**

(74) Representative: **Murgitroyd & Company
165-169 Scotland Street
Glasgow G5 8PL (GB)**

(56) References cited:
CN-A- 106 647 747    CN-A- 107 271 961
JP-A- 2000 056 006   US-A1- 2004 210 346
US-A1- 2004 210 346  US-A1- 2005 267 629
US-A1- 2011 125 504  US-A1- 2018 348 788
US-A1- 2019 155 296

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The present invention relates to the field of intelligent control, in particular to an automatic charging method and system for a robot, a robot, and a storage medium.

**BACKGROUND OF THE INVENTION**

Low repetition rate and high coverage are the goals pursued by mobile robots such as traversing robots for vacuuming, lawn mowing and swimming pool cleaning. Taking a mobile robot like an intelligent robot mower as an example, the robot mower takes a lawn surrounded by the boundary as the working region to mow the lawn, and the outside of the lawn is defined as the non-working region.

In the prior art, the charging system of the robot is mainly composed of a charging station and a boundary line connected to the charging station. When the robot needs to be charged, the robot needs to walk along the boundary line to find a charging pile for connection and charging. In this charging method, the robot searches for the boundary without the principle of proximity. When there are obstacles near the boundary line, the robot needs to randomly search for the boundary line again. Thus, time is wasted, and the power consumption of the robot is increased accordingly.

US2004/210346A1 discloses a method for guiding a robot to return to a docking station which uses a sound wave transmitter and receiver to allow the robot to determine a direction angle and thus whether it is moving towards or away from a docking station. Similar systems and methods are disclosed in US2018/348788A1 and JP2000-56006A.

**SUMMARY OF THE INVENTION**

In order to solve the above technical problems, the objectives of the present invention are to provide an automatic charging method and system for a robot, a robot, and a storage medium.

In order to achieve one of the above objectives of the present invention, an embodiment of the present invention provides an automatic charging method for a robot, the method comprising: S1, recording coordinates of a position A of a charging station;

S2, when the robot receives a charging instruction, recording coordinates of a current position B of the robot;
S3, after driving the robot to walk a preset distance straight with the coordinates of the position B as a starting point, recording coordinates of a current position C of the robot;
S4, calculating a deflection angle and deflection direction of the robot relative to the charging station according to the coordinates of the position A, the position B and the position C;
S5, driving the robot to search for and arrive at the charging station according to the deflection angle and deflection direction.

Through the above method, a charging path can be planned in real time through the positions of the charging station and the robot, so as to save the charging time and improve the use performance of the robot.

The method for calculating the deflection angle comprises:

configuring the deflection angle as an angle of a vector $\overrightarrow{CA}$ and a vector $\overrightarrow{BC}$ and representing the deflection angle as *Angle;* and configuring each recorded position to be represented by latitude and longitude coordinates;

then:    $\angle Angle = ACOS\left(\dfrac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi$ , where

(*x*1, *y*1) represents the longitude and latitude coordinates of the position A,
(*x*2, *y*2) represents the longitude and latitude coordinates of the position B,
(*x*3, *y*3) represents the longitude and latitude coordinates of the position C, *x*1, *x*2, *x*3 represent longitude coordinate values, and *y*1, *y*2, *y*3 represent latitude coordinate values.

In this manner, the deflection angle of the robot is calculated to improve the efficiency.

Step S5 comprises:

determining whether the deflection angle is less than a preset angle threshold,

if so, after replacing the recorded coordinates of the position B with the coordinates of the current position C, performing S2 to S5 cyclically until arriving at the charging station;

otherwise, replacing the recorded coordinates of the position B with the coordinates of the current position C, driving the robot to rotate the deflection angle on site based on the new coordinates of the position B, and performing S2 to S5 cyclically until arriving at the charging station.

This advantageously allows the charging path to be planned in real time through the positions of the charging station and the robot, so as to save the charging time and improve the use performance of the robot.

The method for calculating the deflection direction may further comprise:

calculating a deflection parameter D of the robot relative to the charging station according to the coordinates of the position A, the position B and the position C, $D = (x2 - x1)(y3 - y1) - (y2 - y1)(x3 - x1)$;

if the deflection parameter is greater than 0, driving the robot to deflect to the left;

if the deflection parameter is less than 0, driving the robot to deflect to the right.

Through the above preferred embodiment, the deflection parameter of the robot is confirmed, and the deflection direction is confirmed according to the deflection parameter, thereby improving the efficiency.

Between steps S2 and S3, the method may further comprise:

calculating a distance between the robot and the charging station according to the coordinates of the position A and the position B;

if the distance between them is greater than a preset length threshold, performing S3;

if the distance between them is not greater than the preset length threshold, driving the robot to search for the charging station directly.

Through the above preferred embodiment, the charging path can be planned in real time through the positions of the charging station and the robot, so as to save the charging time and improve the use performance of the robot.

The step of driving the robot to search for the charging station directly may comprise:

turning on a camera device, identifying the charging station through the camera device, and driving the robot to plan a walking path and arrive at the charging station according to the identification result.

Through the above preferred embodiment, the method for the robot to search for the charging station directly is described in detail, which improves the use performance of the robot.

The step of driving the robot to search for the charging station directly may comprise:

driving the robot to search for and arrive at a charging cable connected to the nearest charging station, and after arriving at the charging cable, driving the robot to arrive at the charging station along the charging cable.

Through the above preferred embodiment, the method for the robot to search for the charging station directly is described in detail, which improves the use performance of the robot.

The present invention also provides an automatic charging system for a robot, the system comprising: an acquisition module, configured to record coordinates of a position A of a charging station,

wherein the acquisition module is also configured to record coordinates of a current position B of the robot when the robot receives a charging instruction, and is configured to record coordinates of a position C of the robot after driving the robot to walk a preset distance straight with the coordinates of the position B as a starting point; a processing module, configured to calculate a deflection angle and deflection direction of the robot relative to the charging station according to the coordinates of the position A, the position B and the position C by configuring the deflection angle as an angle of a vector $\overrightarrow{CA}$ and a vector $\overrightarrow{BC}$ and representing the deflection angle as *Angle*; and configuring each recorded position to be represented by latitude and longitude coordinates;

then:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180° / \pi \qquad ,$$

where $(x1, y1)$ represents the longitude and latitude coordinates of the position A, $(x2, y2)$ represents the longitude and latitude coordinates of the position B, $(x3, y3)$ represents the longitude and latitude coordinates of the position C, $x1$, $x2$, $x3$ represent longitude coordinate values, and $y1$, $y2$, $y3$ represent latitude coordinate values, and wherein the processing module is further configured to determine whether the deflection angle is less than a preset angle threshold,

if so, the acquisition module is configured to replace the recorded coordinates of the position B with the coordinates of the current position C, and the automatic charging system is configured to perform steps S2 to S5 of claim 1 cyclically until arriving at the charging station;

otherwise, the acquisition module is configured to replace the recorded coordinates of the position B with the coordinates of the current position C, and the automatic charging system is configured to drive the robot to rotate the deflection angle on site based on the new coordinates of the position B, and to perform steps S2 to S5 of claim 1 cyclically until arriving at the charging station.

Through the above system, a charging path can be planned in real time through the positions of the charging station and the robot, so as to save the charging time and improve the use performance of the robot.

In order to achieve one of the above objectives of the present invention, an embodiment of the present invention provides a robot, comprising a memory and a processor, the memory storing a computer program, and the processor implementing the steps of the above-mentioned automatic charging method for the robot when executing the computer program.

In order to achieve one of the above objectives of the present invention, an embodiment of the present invention provides a readable storage medium, storing a computer program that, when executed by a processor, implements the steps of the above-mentioned automatic charging method for a robot.

Compared with the prior art, the automatic charging method and system for a robot, the robot, and the storage medium of the present invention have the advantages that a charging path can be planned in real time through the positions of the charging station and the robot, so as to save the charging time and improve the use performance of the robot.

## BRIEF DESCRIPTION OF THE DRAWINGS

FIG. 1 is a schematic flowchart of an automatic charging method for a robot according to an embodiment of the present invention;

FIG. 2 is a schematic diagram of a specific example of the present invention;

FIG. 3 is a schematic flowchart of an automatic charging method for a robot according to a preferred embodiment of the present invention; and

FIG. 4 is a schematic diagram of modules of an automatic charging system for a robot according to the present invention.

## DESCRIPTION OF THE PREFERRED EMBODIMENTS

The invention is set forth in the independent claims 1 and 6 and in the dependent claims 2 to 5 and 7 to 8.

The present invention will be described in detail below with reference to various embodiments shown in the accompanying drawings.

The robot system of the present invention may be a robot mower system, a sweeping robot system, a snow sweeper system, a leaf suction machine system, a golf course ball picker system, etc. Each system can automatically walk in a working region and perform corresponding work. In specific examples of the present invention, the robot mower system is taken as an example for detailed description. Correspondingly, the working region may be a lawn.

The robot mower system usually comprises: a robot mower (RM) and a charging station. The robot mower comprises: a body, and a walking unit and a control unit arranged on the body. The walking unit is configured to control the walking, turning, etc. of the robot; the control unit is configured to plan a walking direction and walking path of the robot, store external parameters acquired by the robot, process and analyze the acquired parameters, and specifically control the robot according to the processing and analyzing results; and the control unit is, for example, an MCU or a DSP. The robot and the charging station can be connected by inserting a card or a pin for charging, and the robot can also be charged wirelessly, which will not be described in detail here. It should be noted that the robot mower of the present invention further comprises: a GPS positioning device, through which the position of the charging station and the position of the robot can be recorded, where the positions are recorded with coordinates in multiple ways, for example: recorded with coordinates in an electronic map. In a specific example of the present invention, the latitude and longitude coordinates of the charging station and the robot are recorded.

The robot mower of the present invention may further optionally comprise: a camera device and a charging cable identification device that are arranged in cooperation with the control unit. The camera device is configured to acquire a scenario within a certain range of viewing. The camera device of the present invention is mainly configured to identify the charging station. For example: the camera device identifies the position of the charging station by means of image analysis. The charging cable identification device is mainly configured to identify a charging cable, for example, identify the charging cable connected to the charging station by means of electromagnetic induction. Further, the control unit is combined with the GPS positioning device, the camera device, and the charging cable identification device to control the robot to search for the charging station, and plans an optimal path from the current position to a charging position, which will be described in detail below.

In addition, the robot further comprises: various sensors and storage modules, such as an EPROM, a Flash or an SD card, as well as a working mechanism for working, and a power supply. In this embodiment, the working mechanism comprises a mowing cutter head, and various sensors for sensing the walking state of the walking robot, such as toppling, off-ground, collision sensors, geomagnetism and gyroscopes etc., which will not be described in detail here.

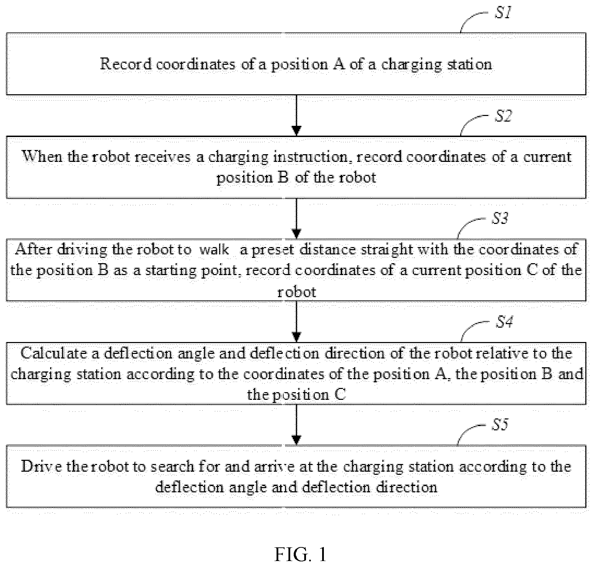

As shown in FIG. 1, an automatic charging method for a robot according to a first embodiment of the present invention comprises the following steps:

S1: Record coordinates of a position A of a charging station;

S2: When the robot receives a charging instruction, record coordinates of a current position B of the robot;

S3: After driving the robot to walk a preset distance straight with the coordinates of the position B as a starting point, record coordinates of a current position C of the robot;

S4: Calculate a deflection angle and deflection direction of the robot relative to the charging station according to the coordinates of the position A, the position B and the position C; and

S5: Drive the robot to search for and arrive at the charging station according to the deflection angle and deflection direction.

For S1, the coordinates of the position A of the charging station may be recorded in many ways, e.g.: positioning in an electronic map, global GPS positioning, etc. In a specific example of the present invention, the robot is initialized at the charging station, and records the current latitude and longitude coordinates of the charging station through GPS for subsequent calculation call. In other embodiments of the present invention, a position at a fixed distance from the charging station may also be recorded, and the position coordinates of the charging station are acquired by calculation.

For S2, the robot records the position B of the robot in the same way as positioning the charging station. Usually, when the robot works, a charging instruction is issued to the robot by determining various rules. The rules are, for example: the available time of the battery is less than a certain value, the power of the battery is less than a certain value, the working time of the robot reaches a certain value, etc. When the robot receives the charging instruction, the coordinates of the current position B are recorded, and a charging return path of the robot is planed according to the coordinates of the position A and the position B.

For S3, the preset distance is a distance constant value, and can be specifically set as required. In a preferred embodiment of the present invention, the preset distance may be set according to the accuracy of the GPS positioning device. For example: the positioning accuracy of the GPS positioning system is 1 m, that is, when the distance between two positions is more than 1, the coordinates of the two positions are different. In this way, the preset distance may be set to 2 m or more.

Preferably, for S3, after the robot receives the charging instruction, the robot is driven to walk the preset distance along a straight line formed by the axis of the robot with the coordinates of the position B as a starting point, that is, its walking direction remains unchanged; and after the robot walks the preset distance, the coordinates of the current position C of the robot are recorded, where the coordinates of the position C are also latitude and longitude coordinates in the same measurement unit as the position A.

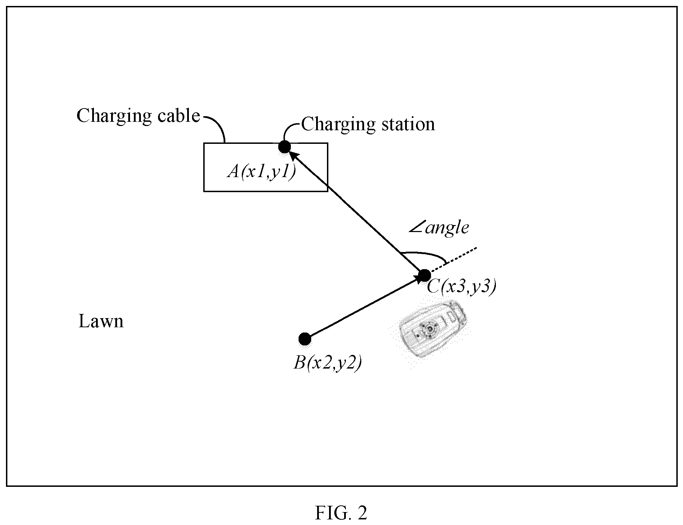

With reference to FIG. 2, S4 comprises: configuring the deflection angle as an angle of a vector $\overrightarrow{CA}$ and a vector $\overrightarrow{BC}$ and representing the deflection angle as *Angle*; and configuring each recorded position to be represented by latitude and longitude coordinates; then:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi \text{ , where}$$

(*x*1, *y*1) represents the longitude and latitude coordinates of the position A,
(*x*2, *y*2) represents the longitude and latitude coordinates of the position B,
(*x*3, *y*3) represents the longitude and latitude coordinates of the position C, *x*1, *x*2, *x*3 represent longitude coordinate values, and *y*1, *y*2, *y*3 represent latitude coordinate values.

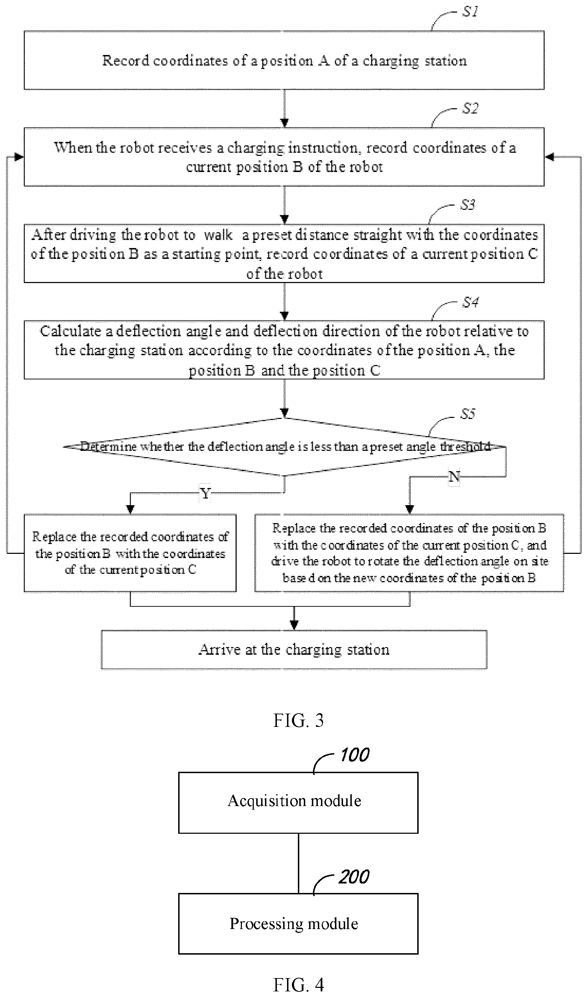

Step S5 comprises (with reference to FIG. 3): determining whether the deflection angle is less than a preset angle threshold, and if so, after replacing the recorded coordinates of the position B with the coordinates of the current position C, performing S2 to S5 cyclically until arriving at the charging station; otherwise, replacing the recorded coordinates of the position B with the coordinates of the current position C, driving the robot to rotate the deflection angle on site based on the new coordinates of the position B, and performing S2 to S5 cyclically until arriving at the charging station.

The angle threshold is a preset angle constant value. When the deflection angle is between 0 degree and the angle threshold, the advancing direction of the robot is approximate to the straight extension direction from the current position to the charging station. In this case, the heading of the robot does not need to be adjusted, as long as S3 to S5 are continued, and the robot can search for and arrive at the charging station according to an optimal path.

In a preferred embodiment of the present invention, a method for calculating the deflection direction comprises: calculating a deflection parameter of the robot relative to the charging station according to the coordinates of the position A, the position B and the position C, and confirming the deflection direction of the robot according to the deflection parameter.

In a specific embodiment of the present invention, the deflection parameter is configured to be represented by D, Then:

$$D = (x2 - x1)(y3 - y1) - (y2 - y1)(x3 - x1);$$

If the deflection parameter is greater than 0, the robot is driven to deflect to the left; and if the deflection parameter is less than 0, the robot is driven to deflect to the right.

It can be understood that, in this embodiment, the purpose of calculating the deflection parameter D is to determine the positional relationship between the coordinate point A where the charging station is located and the vector $\overrightarrow{BC}$, where D>0 indicates that the point A is on the left of the vector $\overrightarrow{BC}$, D<0 indicates that the point A is on the right of the vector $\overrightarrow{BC}$, and D=0 indicates that the point A is on the vector $\overrightarrow{BC}$. In a specific embodiment of the present invention, when A is on the vector BC, the deflection angle ∠Angle is 0°. Then, ∠Angle is less than the preset angle threshold, and no deflection is required. After the robot rotates the deflection angle from the current position according to the calculated deflection direction, its high-probability walking path is a straight path toward the charging station, and after S2 to S5 are performed cyclically, the robot gradually approaches and arrives at the charging station. Of course, before the robot arrives at the charging station, natural angle changes may occur due to special circumstances, such as encountering obstacles. However, S2 to S5 are performed cyclically before the robot arrives at the charging station in this application. In this way, before the robot arrives at the charging station, even if emergencies occur, the robot always searches for the optimal path back to the charging station.

In a preferred embodiment of the present invention, between S2 and S3, the method further comprises: calculating a distance between the robot and the charging station according to the coordinates of the position A and the position B; if the distance between them is greater than a preset distance length threshold, performing S3; and if the distance between them is not greater than the preset length threshold, driving the robot to search for the charging station directly.

Specifically, driving the robot to search for the charging station directly comprises: driving the robot to search for and arrive at a charging cable connected to the nearest charging station, and after arriving at the charging cable, driving the robot to arrive at the charging station along the charging cable; and/or turning on a camera device, identifying the charging station through the camera device, and driving the robot to plan a walking path and arrive at the charging station according to the identification result.

As can be understood, the method of returning to the charging station along the boundary and the method of identifying and arriving at the charging station through the camera device are both existing technologies, and will not be described in detail here.

In addition, it should be noted that the charging cable in this embodiment is usually connected to the charging station and has a short path. For example, the length of the charging cable is set to be 1 m. The main purpose of setting the charging cable is to search for the charging station, which will not be further repeated here.

In an embodiment of the present invention, a robot is further provided, comprising a memory and a processor, the memory storing a computer program, and the processor implementing the steps of the automatic charging method for the robot according to any of the forgoing embodiments when executing the computer program.

In an embodiment of the present invention, a readable storage medium is further provided, storing a computer program that, when executed by a processor, implements the steps of the automatic charging method for a robot according to any of the forgoing embodiments.

With reference to FIG. 4, an automatic charging system for a robot is provided, the system comprising: an acquisition module 100 and a processing module 200.

The acquisition module 100 is configured to record coordinates of a position A of a charging station; when the robot receives a charging instruction, record coordinates of a current position B of the robot; and after driving the robot to walk a preset distance straight with the coordinates of the position B as a starting point, record coordinates of a current position C of the robot.

The processing module 200 is configured to drive the robot to walk, and calculate a deflection angle and deflection direction of the robot relative to the charging station according to the coordinates of the position A, the position B and the position C; and drive the robot to search for and arrive at the charging station according to the deflection angle and deflection direction.

Further, the acquisition module 100 is used to implement S1 to S3; and the processing module 200 is used to implement S4 and S5. Those skilled in the art can clearly understand that, for the convenience and brevity of the description, the specific working process of the system described above may be referred to the corresponding process in the foregoing method embodiments, which will not be repeated here.

To sum up, the automatic charging method and system for a robot, the robot, and the storage medium of the present invention have the advantages that a charging path can be planned in real time through the positions of the charging station and the robot, so as to save the charging time and improve the use performance of the robot.

In the several embodiments provided in this application, it should be understood that the disclosed modules, systems and methods can all be implemented in other ways. The system embodiment described above is only illustrative. The division of the modules is only a logic function division, and other divisions may be used in practice. For example, a plurality of modules or components may be combined or integrated to another system, or some features may be neglected or not executed.

The modules described as separate components may be or may not be physically separated, and the components displayed as modules may be or may not be physical modules, that is, the components may be located at one place or may also be distributed on a plurality of network modules. Some or all of the modules may be selected according to actual requirements to achieve the objective of the solution in this embodiment.

In addition, each functional module in each embodiment of the present application may be integrated into one processing module, or each module may exist physically alone, or two or more modules may be integrated into one module. The integrated modules may be implemented in the form of hardware, or may be implemented in the form of hardware plus software function modules.

**Claims**

1. An automatic charging method for a robot comprising the following steps:

   S1, recording coordinates of a position A of a charging station;
   S2, when the robot receives a charging instruction, recording coordinates of a current position B of the robot;
   S3, after driving the robot to walk a preset distance straight with the coordinates of the position B as a starting point, recording coordinates of a current position C of the robot;
   S4, calculating a deflection angle and deflection direction of the robot relative to the charging station according to the coordinates of the position A, the position B and the position C wherein the method for calculating the deflection angle comprises:

   configuring the deflection angle as an angle of a vector $\overrightarrow{CA}$ and a vector $\overrightarrow{BC}$ and representing the deflection angle as *Angle;* and configuring each recorded position to be represented by latitude and longitude coordinates; then:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi,$$

   where *(x*1, *y*1) represents the longitude and latitude coordinates of the position A, *(x*2, *y*2) represents the longitude and latitude coordinates of the position B, *(x*3, *y*3) represents the longitude and latitude coordinates of the position C, *x*1, *x*2, *x*3 represent longitude coordinate values, and *y*1, *y*2, *y*3 represent latitude coordinate values;
   S5, determining whether the deflection angle is less than a preset angle threshold,
   if so, after replacing the recorded coordinates of the position B with the coordinates of the current position C, performing S2 to S5 cyclically until arriving at the charging station;
   otherwise, replacing the recorded coordinates of the position B with the coordinates of the current position C, driving the robot to rotate the deflection angle on site based on the new coordinates of the position B, and performing S2 to S5 cyclically until arriving at the charging station.

2. The automatic charging method for a robot according to claim 1, wherein the method for calculating the deflection direction also comprises:

calculating a deflection parameter D of the robot relative to the charging station according to the coordinates of the position A, the position B and the position C, $D = (x2 - x1)(y3 - y1) - (y2 - y1)(x3 - x1)$;
if the deflection parameter is greater than 0, driving the robot to deflect to the left;
if the deflection parameter is less than 0, driving the robot to deflect to the right.

3. The automatic charging method for a robot according to claim 1, wherein between S2 and S3, the method further comprises:

calculating a distance between the robot and the charging station according to the coordinates of the position A and the position B;
if the distance between them is greater than a preset length threshold, performing S3;
if the distance between them is not greater than the preset length threshold, driving the robot to search for the charging station directly.

4. The automatic charging method for a robot according to claim 3, wherein the step of driving the robot to search for the charging station directly comprises:
turning on a camera device, identifying the charging station through the camera device, and driving the robot to plan a walking path and arrive at the charging station according to the identification result.

5. The automatic charging method for a robot according to claim 3, wherein the step of driving the robot to search for the charging station directly comprises:
driving the robot to search for and arrive at a charging cable connected to the nearest charging station, and after arriving at the charging cable, driving the robot to arrive at the charging station along the charging cable.

6. An automatic charging system for a robot, comprising:

an acquisition module (100), configured to record coordinates of a position A of a charging station,
wherein the acquisition module (100) is also configured to record coordinates of a current position B of the robot when the robot receives a charging instruction, and is configured to record coordinates of a position C of the robot after driving the robot to walk a preset distance straight with the coordinates of the position B as a starting point; and
a processing module (200), configured to calculate a deflection angle and deflection direction of the robot relative to the charging station according to the coordinates of the position A, the position B and the position C by configuring the deflection angle as an angle of a vector $\overrightarrow{CA}$ and a vector $\overrightarrow{BC}$ and representing the deflection angle as *Angle*; and configuring each recorded position to be represented by latitude and longitude coordinates; then:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi,$$

where $(x1, y1)$ represents the longitude and latitude coordinates of the position A, $(x2, y2)$ represents the longitude and latitude coordinates of the position B, $(x3, y3)$ represents the longitude and latitude coordinates of the position C, $x1$, $x2$, $x3$ represent longitude coordinate values, and $y1$, $y2$, $y3$ represent latitude coordinate values, and wherein the processing module (200) is further configured to
determine whether the deflection angle is less than a preset angle threshold,
if so, the acquisition module (100) is configured to replace the recorded coordinates of the position B with the coordinates of the current position C, and the automatic charging system is configured to perform steps S2 to S5 of claim 1 cyclically until arriving at the charging station;
otherwise, the acquisition module (100) is configured to replace the recorded coordinates of the position B with the coordinates of the current position C, and the automatic charging system is configured to drive the robot to rotate the deflection angle on site based on the new coordinates of the position B, and to perform steps S2 to S5 of claim 1 cyclically until arriving at the charging station.

7. A robot, comprising a memory and a processor, the memory storing a computer program, wherein the processor implements the steps of the automatic charging method for the robot according to any one of claims 1-5 when executing the computer program.

8. A readable storage medium, storing a computer program thereon, wherein when the computer program is executed by a processor, the steps of the automatic charging method for the robot according to any one of claims 1-5 are implemented.

**Patentansprüche**

1. Ein automatisches Ladeverfahren für einen Roboter, das die folgenden Schritte beinhaltet:

   S1, Aufzeichnen von Koordinaten einer Position A einer Ladestation;
   S2, wenn der Roboter eine Ladeanweisung empfängt, Aufzeichnen von Koordinaten einer aktuellen Position B des Roboters;
   S3, nach dem Fahren des Roboters, um eine voreingestellte Strecke in einer geraden Linie mit den Koordinaten der Position B als Startpunkt zurückzulegen, Aufzeichnen von Koordinaten einer aktuellen Position C des Roboters;
   S4, Berechnen eines Ablenkungswinkels und einer Ablenkungsrichtung des Roboters relativ zu der Ladestation gemäß den Koordinaten der Position A, der Position B und der Position C, wobei das Verfahren zum Berechnen des Ablenkungswinkels Folgendes beinhaltet:

   Konfigurieren des Ablenkungswinkels als einen Winkel eines Vektors $\overrightarrow{CA}$ und eines Vektors $\overrightarrow{BC}$ und Darstellen des Ablenkungswinkels als *Angle*; und Konfigurieren jeder aufgezeichneten Position, um durch Breiten- und Längenkoordinaten dargestellt zu werden;
   dann:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right)*180°/\pi$$

   wobei ($x1$, $y1$) die Längen- und Breitenkoordinaten der Position A darstellt, ($x2$, $y2$) die Längen- und Breitenkoordinaten der Position B darstellt, ($x3$, $y3$) die Längen- und Breitenkoordinaten der Position C darstellt, $x1$, $x2$, $x3$ Längenkoordinatenwerte darstellen, und $y1$, $y2$, $y3$ Breitenkoordinatenwerte darstellen;
   S5, Bestimmen, ob der Ablenkungswinkel kleiner als eine voreingestellte Winkelschwelle ist,
   wenn dies der Fall ist, nach dem Ersetzen der aufgezeichneten Koordinaten der Position B durch die Koordinaten der aktuellen Position C, zyklisches Durchführen von S2 bis S5, bis die Ladestation erreicht ist;
   andernfalls Ersetzen der aufgezeichneten Koordinaten der Position B durch die Koordinaten der aktuellen Position C, Fahren des Roboters, um den Ablenkungswinkel vor Ort basierend auf den neuen Koordinaten der Position B zu drehen, und zyklisches Durchführen von S2 bis S5, bis die Ladestation erreicht ist.

2. Automatisches Ladeverfahren für einen Roboter gemäß Anspruch 1, wobei das Verfahren zum Berechnen der Ablenkungsrichtung auch Folgendes beinhaltet:

   Berechnen eines Ablenkungsparameters D des Roboters relativ zu der Ladestation gemäß den Koordinaten der Position A, der Position B und der Position C, wobei $D = (x2 - x1)(y3 - y1) - (y2 - y1)(x3 - x1)$;
   wenn der Ablenkungsparameter größer als 0 ist, Fahren des Roboters, um nach links abzulenken;
   wenn der Ablenkungsparameter kleiner als 0 ist, Fahren des Roboters, um nach rechts abzulenken.

3. Automatisches Ladeverfahren für einen Roboter gemäß Anspruch 1, wobei das Verfahren zwischen S2 und S3 ferner Folgendes beinhaltet:

   Berechnen einer Strecke zwischen dem Roboter und der Ladestation gemäß den Koordinaten der Position A und der Position B;
   wenn die Strecke zwischen ihnen größer als eine voreingestellte Längenschwelle ist, Durchführen von S3;
   wenn die Strecke zwischen ihnen nicht größer als die voreingestellte Längenschwelle ist, Fahren des Roboters, um direkt nach der Ladestation zu suchen.

4. Automatisches Ladeverfahren für einen Roboter gemäß Anspruch 3, wobei der Schritt des Fahrens des Roboters, um direkt nach der Ladestation zu suchen, Folgendes beinhaltet:
Einschalten einer Kameravorrichtung, Identifizieren der Ladestation durch die Kameravorrichtung und Fahren des Roboters, um einen Gehweg zu planen und die Ladestation gemäß dem Identifikationsergebnis zu erreichen.

5. Automatisches Ladeverfahren für einen Roboter gemäß Anspruch 3, wobei der Schritt des Fahrens des Roboters, um direkt nach der Ladestation zu suchen, Folgendes beinhaltet:
Fahren des Roboters, um ein Ladekabel zu suchen und zu erlangen, das mit der nächstgelegenen Ladestation verbunden ist, und nach dem Erlangen des Ladekabels, Fahren des Roboters, um die Ladestation entlang des Ladekabels zu erlangen.

6. Ein automatisches Ladesystem für einen Roboter, das Folgendes beinhaltet:

ein Erfassungsmodul (100), das konfiguriert ist, um Koordinaten einer Position A einer Ladestation aufzuzeichnen,
wobei das Erfassungsmodul (100) auch konfiguriert ist, um Koordinaten einer aktuellen Position B des Roboters aufzuzeichnen, wenn der Roboter eine Ladeanweisung empfängt, und konfiguriert ist, um Koordinaten einer Position C des Roboters aufzuzeichnen, nachdem der Roboter gefahren wurde, um eine voreingestellte Strecke in einer geraden Linie mit den Koordinaten der Position B als Startpunkt zurückzulegen; und
ein Verarbeitungsmodul (200), das konfiguriert ist, um einen Ablenkungswinkel und eine Ablenkungsrichtung des Roboters relativ zu der Ladestation gemäß den Koordinaten der Position A, der Position B und der Position C durch Konfigurieren des Ablenkungswinkels als einen Winkel eines Vektors $\overrightarrow{CA}$ und eines Vektors $\overrightarrow{BC}$ zu berechnen und Darstellen des Ablenkungswinkels als *Angle;* und Konfigurieren jeder aufgezeichneten Position, um durch Breiten- und Längenkoordinaten dargestellt zu werden;
dann:

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi$$

wobei ($x1$, $y1$) die Längen- und Breitenkoordinaten der Position A darstellt, ($x2$, $y2$) die Längen- und Breitenkoordinaten der Position B darstellt, ($x3$, $y3$) die Längen- und Breitenkoordinaten der Position C darstellt, $x1$, $x2$, $x3$ Längenkoordinatenwerte darstellen, und $y1$, $y2$, $y3$ Breitenkoordinatenwerte darstellen, und wobei das Verarbeitungsmodul (200) ferner konfiguriert ist, um
zu bestimmen, ob der Ablenkungswinkel kleiner als eine voreingestellte Winkelschwelle ist,
wenn dies der Fall ist, das Erfassungsmodul (100) konfiguriert ist, um die aufgezeichneten Koordinaten der Position B durch die Koordinaten der aktuellen Position C zu ersetzen, und das automatische Ladesystem konfiguriert ist, um die Schritte S2 bis S5 von Anspruch 1 zyklisch durchzuführen, bis die Ladestation erreicht ist;
andernfalls das Erfassungsmodul (100) konfiguriert ist, um die aufgezeichneten Koordinaten der Position B durch die Koordinaten der aktuellen Position C zu ersetzen, und das automatische Ladesystem konfiguriert ist, um den Roboter zu fahren, um den Ablenkungswinkel vor Ort basierend auf den neuen Koordinaten der Position B zu drehen, und um die Schritte S2 bis S5 von Anspruch 1 zyklisch durchzuführen, bis die Ladestation erreicht ist.

7. Ein Roboter, der einen Speicher und einen Prozessor beinhaltet, wobei der Speicher ein Computerprogramm speichert, wobei der Prozessor die Schritte des automatischen Ladeverfahrens für den Roboter gemäß einem der Ansprüche 1-5 implementiert, wenn das Computerprogramm ausgeführt wird.

8. Ein lesbares Speichermedium, das ein Computerprogramm darauf speichert, wobei, wenn das Computerprogramm von einem Prozessor ausgeführt wird, die Schritte des automatischen Ladeverfahrens für den Roboter gemäß einem der Ansprüche 1-5 implementiert werden.

**Revendications**

1. Un procédé de recharge automatique pour robot comprenant les étapes suivantes :

S1, l'enregistrement de coordonnées d'une position A d'une station de recharge ;

S2, lorsque le robot reçoit une instruction de recharge, l'enregistrement de coordonnées d'une position actuelle B du robot ;

S3, après pilotage du robot pour parcourir une distance prédéfinie en ligne droite avec les coordonnées de la position B comme point de départ, l'enregistrement de coordonnées d'une position actuelle C du robot ;

S4, le calcul d'un angle de déviation et d'un sens de déviation du robot par rapport à la station de recharge en fonction des coordonnées de la position A, de la position B et de la position C, le procédé pour le calcul de l'angle de déviation comprenant :

la configuration de l'angle de déviation comme angle d'un vecteur CA et d'un vecteur BC et la représentation de l'angle de déviation par *Angle* ; et la configuration de chaque position enregistrée pour qu'elle soit représentée par des coordonnées de latitude et de longitude ;

donc :

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi,$$

où $(x_1, y_1)$ représente les coordonnées de longitude et de latitude de la position A, $(x_2, y_2)$ représente les coordonnées de longitude et de latitude de la position B, $(x_3, y_3)$ représente les coordonnées de longitude et de latitude de la position C, $x_1$, $x_2$, $x_3$ représentent des valeurs de coordonnées de longitude, et $y_1$, $y_2$, $y_3$ représentent des valeurs de coordonnées de latitude ;

S5, la détermination quant à savoir si l'angle de déviation est inférieur à un seuil d'angle prédéfini,

si c'est le cas, après remplacement des coordonnées enregistrées de la position B par les coordonnées de la position actuelle C, l'accomplissement de S2 à S5 cycliquement jusqu'à atteinte de la station de recharge ;

sinon, le remplacement des coordonnées enregistrées de la position B par les coordonnées de la position actuelle C, le pilotage du robot pour tourner de l'angle de déviation sur site sur la base des nouvelles coordonnées de la position B, et l'accomplissement de S2 à S5 cycliquement jusqu'à atteinte de la station de recharge.

2. Le procédé de recharge automatique pour robot selon la revendication 1, dans lequel le procédé pour le calcul du sens de déviation comprend également :

le calcul d'un paramètre de déviation D du robot par rapport à la station de recharge en fonction des coordonnées de la position A, de la position B et de la position C, $D = (x_2 - x_1)(y_3 - y_1) - (y_2 - y_1)(x_3 - x_1)$ ;

si le paramètre de déviation est supérieur à 0, le pilotage du robot pour dévier vers la gauche ;

si le paramètre de déviation est inférieur à 0, le pilotage du robot pour dévier vers la droite.

3. Le procédé de recharge automatique pour robot selon la revendication 1, le procédé comprenant en outre, entre S2 et S3 :

le calcul d'une distance entre le robot et la station de recharge en fonction des coordonnées de la position A et de la position B ;

si la distance entre eux est supérieure à un seuil de longueur prédéfini, l'accomplissement de S3 ;

si la distance entre eux n'est pas supérieure au seuil de longueur prédéfini, le pilotage du robot pour rechercher directement la station de recharge.

4. Le procédé de recharge automatique pour robot selon la revendication 3, dans lequel l'étape de pilotage du robot pour rechercher directement la station de recharge comprend :

la mise sous tension d'un dispositif de caméra, l'identification de la station de recharge par l'intermédiaire du dispositif de caméra, et le pilotage du robot pour planifier une trajectoire de parcours et atteindre la station de recharge en fonction du résultat d'identification.

5. Le procédé de recharge automatique pour robot selon la revendication 3, dans lequel l'étape de pilotage du robot pour rechercher directement la station de recharge comprend :

le pilotage du robot pour rechercher et atteindre un câble de recharge connecté à la station de recharge la plus proche, et après atteinte du câble de recharge, le pilotage du robot pour atteindre la station de recharge en longeant le câble de recharge.

**6.** Un système de recharge automatique pour robot, comprenant :

un module d'acquisition (100), configuré pour enregistrer des coordonnées d'une position A d'une station de recharge,

le module d'acquisition (100) étant également configuré pour enregistrer des coordonnées d'une position actuelle B du robot lorsque le robot reçoit une instruction de recharge, et étant configuré pour enregistrer des coordonnées d'une position C du robot après pilotage du robot pour parcourir une distance prédéfinie en ligne droite avec les coordonnées de la position B comme point de départ ; et

un module de traitement (200), configuré pour calculer un angle de déviation et un sens de déviation du robot par rapport à la station de recharge en fonction des coordonnées de la position A, de la position B et de la position C par la configuration de l'angle de déviation comme angle d'un vecteur $\overrightarrow{CA}$ et d'un vecteur $\overrightarrow{BC}$ et la représentation de l'angle de déviation par *Angle* ; et la configuration de chaque position enregistrée pour qu'elle soit représentée par des coordonnées de latitude et de longitude ;

donc :

$$\angle Angle = ACOS\left(\frac{(x3-x2)(x1-x3)+(y3-y2)(y1-y3)}{\sqrt{(x3-x2)^2(y3-y2)^2}\sqrt{(x1-x3)^2(y1-y3)^2}}\right) * 180°/\pi,$$

où $(x_1, y_1)$ représente les coordonnées de longitude et de latitude de la position A, $(x_2, y_2)$ représente les coordonnées de longitude et de latitude de la position B, $(x_3, y_3)$ représente les coordonnées de longitude et de latitude de la position C, $x_1, x_2, x_3$ représentent des valeurs de coordonnées de longitude, et $y_1, y_2, y_3$ représentent des valeurs de coordonnées de latitude, et dans lequel le module de traitement (200) est en outre configuré pour déterminer si l'angle de déviation est inférieur à un seuil d'angle prédéfini,

si c'est le cas, le module d'acquisition (100) est configuré pour remplacer les coordonnées enregistrées de la position B par les coordonnées de la position actuelle C, et le système de recharge automatique est configuré pour accomplir les étapes S2 à S5 de la revendication 1 cycliquement jusqu'à atteinte de la station de recharge ;

sinon, le module d'acquisition (100) est configuré pour remplacer les coordonnées enregistrées de la position B par les coordonnées de la position actuelle C, et le système de recharge automatique est configuré pour piloter le robot pour tourner de l'angle de déviation sur site sur la base des nouvelles coordonnées de la position B, et pour accomplir les étapes S2 à S5 de la revendication 1 cycliquement jusqu'à atteinte de la station de recharge.

**7.** Un robot, comprenant une mémoire et un processeur, la mémoire stockant un programme informatique, dans lequel le processeur met en oeuvre les étapes du procédé de recharge automatique pour robot selon l'une quelconque des revendications 1 à 5 lors de l'exécution du programme informatique.

**8.** Un support de stockage lisible, sur lequel est stocké un programme informatique, dans lequel lorsque le programme informatique est exécuté par un processeur, les étapes du procédé de recharge automatique pour robot selon l'une quelconque des revendications 1 à 5 sont mises en œuvre.

S1

Record coordinates of a position A of a charging station

S2

When the robot receives a charging instruction, record coordinates of a current position B of the robot

S3

After driving the robot to walk a preset distance straight with the coordinates of the position B as a starting point, record coordinates of a current position C of the robot

S4

Calculate a deflection angle and deflection direction of the robot relative to the charging station according to the coordinates of the position A, the position B and the position C

S5

Drive the robot to search for and arrive at the charging station according to the deflection angle and deflection direction

FIG. 1

Charging cable

Charging station

A(x1,y1)

∠angle

C(x3,y3)

Lawn

B(x2,y2)

FIG. 2

S1

Record coordinates of a position A of a charging station

S2

When the robot receives a charging instruction, record coordinates of a current position B of the robot

S3

After driving the robot to walk a preset distance straight with the coordinates of the position B as a starting point, record coordinates of a current position C of the robot

S4

Calculate a deflection angle and deflection direction of the robot relative to the charging station according to the coordinates of the position A, the position B and the position C

S5

Determine whether the deflection angle is less than a preset angle threshold

Y

N

Replace the recorded coordinates of the position B with the coordinates of the current position C

Replace the recorded coordinates of the position B with the coordinates of the current position C, and drive the robot to rotate the deflection angle on site based on the new coordinates of the position B

Arrive at the charging station

FIG. 3

100

Acquisition module

200

Processing module

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004210346 A1
- US 2018348788 A1

- JP 2000056006 A